(19) Europäisches Patentamt
European Patent Office
Office européen des brevets

(11) **EP 4 258 601 B1**

(12) **EUROPEAN PATENT SPECIFICATION**

(45) Date of publication and mention
of the grant of the patent:
**18.06.2025 Bulletin 2025/25**

(21) Application number: **23166678.5**

(22) Date of filing: **05.04.2023**

(51) International Patent Classification (IPC):
***H04L 9/40*** (2022.01)

(52) Cooperative Patent Classification (CPC):
**H04L 63/1433**

(54) **ONTOLOGY-BASED RISK PROPAGATION OVER DIGITAL TWINS**

ONTOLOGIEBASIERTE RISIKOAUSBREITUNG ÜBER DIGITALE ZWILLINGE

PROPAGATION DE RISQUE BASÉE SUR L'ONTOLOGIE SUR DES JUMEAUX NUMÉRIQUES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.04.2022 PL 44088722**
**03.04.2023 US 202318194791**

(43) Date of publication of application:
**11.10.2023 Bulletin 2023/41**

(73) Proprietor: **Accenture Global Solutions Limited
Dublin 4 (IE)**

(72) Inventors:
• **ENGELBERG, Gal**
**Pardes-hana (IL)**
• **HADAR, Eitan**
**3686210 Nesher 02 (IL)**
• **KLEIN, Dan**
**4856111 Rosh Ha'ayin (IL)**
• **KUBOSZEK, Adrian**
**55-010 Dolnoslaskie (PL)**

(74) Representative: **Strange, Harry George
Withers & Rogers LLP
2 London Bridge
London, Greater London SE1 9RA (GB)**

(56) References cited:
**EP-A1- 4 047 870**

• **QUAN LIU ET AL: "Modelling a large scale
system for risk assessment", 2015
INTERNATIONAL CONFERENCE ON
INDUSTRIAL ENGINEERING AND SYSTEMS
MANAGEMENT (IESM), INTERNATIONAL
INSTITUTE FOR INNOVATION, INDUSTRIAL
ENGINEERING AND ENTREPRENEURSHIP -
I4E2, 21 October 2015 (2015-10-21), pages 203 -
208, XP032848374, DOI: 10.1109/
IESM.2015.7380158**
• **ENGELBERG GAL ET AL: "An Ontology-Driven
Approach for Process-Aware Risk Propagation",
COMPUTATIONAL BIOLOGY AND
BIOINFORMATICS, ACM, 2 PENN PLAZA, SUITE
701NEW YORKNY10121-0701USA, 27 March
2023 (2023-03-27), pages 1742 - 1745,
XP059137892, ISBN: 978-1-4503-6552-9, DOI:
10.1145/3555776.3577795**

## Description

## FIELD

This specification relates to systems for evaluating and mitigating risks in enterprise networks.

## BACKGROUND

Networks, such as computer networks, are susceptible to attack by malicious users (e.g., hackers) and other adverse impacts. For example, hackers can infiltrate computer networks in an effort to obtain sensitive information (e.g., user credentials, payment information, address information, social security numbers) and/or to take over control of one or more systems. Computer networks are used to execute processes that support operations of enterprises and/or industrial infrastructures. Enterprises, in general, and industrial infrastructures, in particular, are increasingly connected to external networks such as the Internet. As such, processes that were once isolated from the open Internet network, are now vulnerable to external cyber-attacks. As the frequency and derived impact of these attacks increase, there is a need to prioritize and mitigate risks in order of importance to the operations.

To defend against such attacks, enterprises use security systems to monitor occurrences of potentially adverse events occurring within a network, and alert security personnel to such occurrences. For example, one or more dashboards can be provided, which provide lists of alerts that are to be addressed by the security personnel.

In an effort to defend against attacks, so-called knowledge graphs can be generated, which represent relationships between assets and processes within networks. A knowledge graph can be used to understand how a computer network can be hacked and undesirable consequences that can result. Accordingly, knowledge graphs can be described as an important tool in developing anti-hacker defenses. For example, a knowledge graph can be used to identify the most vulnerable components within a computer network, and can be used to evaluate fixes of vulnerabilities that the knowledge graph reveals (e.g., by fixing a limited number of issues, any adversary attack on the computer network, or on certain components in the computer network can be stopped).

Liu et al "Modelling a large scale system for risk assessment" (Espacenet non-patent literature number XP32848374A) discloses a study of structuring large scale systems for risk assessment and management.

## SUMMARY

Implementations of the present disclosure are directed to mitigating risk in enterprise networks. More particularly, implementations of the present disclosure are directed to executing risk propagation analytics over a digital twin in a domain-agnostic manner.

In some examples, implementations of the present disclosure are provided as a process for evaluating risk propagation of networks using a digital twin. A digital twin is a digital representation of a physical object, process, or service. The disclosed techniques can be implemented to enable computation and execution of risk analytics over digital twins represented by a knowledge graph in a domain-agnostic manner and in a way that enables identifying root causes of risk. An example system executes risk propagation analytics in a generic manner, regardless of the specific digital twin's ontological and data domain. For instance, in a cyber domain, there is a need to propagate risk from cyber impacts through cyber assets to processes. In a production domain, there is a need to propagate risk from activities through sub processes to parent processes. Furthermore, each domain may have different relevant risk aspects. For instance, in the cyber domain, an attacker could trigger an impact over asset's confidentiality. In the production domain, a problem with an asset or process could impact the quality of the resulting product.

The invention provides a computer-implemented method for mitigating cyber security risk of an enterprise network, the method being executed by one or more processors and comprising: obtaining generic ontology data representing classes, properties, and relations for multiple use cases, generating, from the generic ontology data, domain-specific ontology data representing classes, properties, and relations for a particular use case, and generating a knowledge graph by mapping the generic ontology data to the domain-specific ontology data, the knowledge graph including nodes and edges between the nodes, the nodes including asset nodes representing assets and process nodes representing processes; each edge representing a relation between nodes; determining, from the knowledge graph, an aggregated risk for a first process represented by a first process node, including: identifying, for the first process node, a set of incoming nodes, each incoming node comprising an asset node or a process node and being connected to the first process node by a respective edge; determining a direct risk for the first process based on relations between the first process node and asset nodes of the set of incoming nodes; and determining an indirect risk for the first process based on relations between the first process node and process nodes of the set of incoming nodes; and generating, based on the aggregated risk for the first process node, a mitigation recommendation including one or more actions for reducing the aggregated risk for the first process node.

The invention also provides corresponding non-transitory computer-readable storage media according to claim 13 and a corresponding system according to claim 14.

These implementations can each optionally include one or more of the following features: determining the direct risk for the first process node based on relations between the first process node and asset nodes of the set of incoming nodes comprises: identifying an edge representing a relation between the first process node and a first asset node, the edge being associated with an importance value representing an amount of risk propagated from the first asset node to the first process node; and determining the direct risk for the first process node by multiplying the importance value by a risk associated with the first asset node; determining the indirect risk for the first process based on relations between the first process node and process nodes of the set of incoming nodes comprises: identifying an edge representing a relation between the first process node and a second process node, the edge being associated with an importance value representing an amount of risk propagated from the second process node to the first process node; and determining the indirect risk for the first process node by multiplying the importance value by a risk associated with the second process node; the direct risk for the first process is represented by a direct risk vector including multiple risk values each risk value being associated with a different aspect of risk; aspects of risk include availability risk, confidentiality risk, integrity risk, and safety risk; the indirect risk for the first process is represented by an indirect risk vector including multiple risk values, each risk value being associated with the different aspect of risk; the aggregated risk for the first process is represented by an aggregated risk vector including multiple risk values, each risk value being associated with the different aspect of risk; determining the aggregated risk for the first process comprises generating the aggregated risk vector, including selecting, for each of the different aspects of risk, the maximum risk value between the direct risk vector and indirect risk vector; each edge is associated with an importance vector representing an amount of risk propagated between nodes connected by the edge; the actions include: obtaining generic ontology data representing classes, properties, and relations for multiple use cases; generating, from the generic ontology data, domain-specific ontology data representing classes, properties, and relations for a particular use case; and generating the knowledge graph by mapping the generic ontology data to the domain-specific ontology data; each edge represents a hierarchy relation, an abstraction relation, or a process dependency relation; a process dependency relation represents risk propagation through a workflow including multiple processes; a hierarchy relation represents risk propagation from an asset to a process that is correlated with the asset; an abstraction relation represents risk propagation from an asset to a process at a higher level of abstraction; the actions include automatically executing at least one of the one or more actions included in the mitigation recommendation; the actions include presenting, through a user interface, a graphical representation of the knowledge graph and an indication of the mitigation recommendation.

The details of one or more implementations of the present disclosure are set forth in the accompanying drawings and the description below. Other features and advantages of the present disclosure will be apparent from the description and drawings, and from the claims.

## DESCRIPTION OF DRAWINGS

FIG. 1 depicts an example architecture that can be used to execute implementations of the present disclosure.

FIG. 2A depicts a process for performing risk propagation analytics using domain-specific concepts.

FIG. 2B depicts a conceptual architecture for performing risk propagation analytics using domain-specific concepts.

FIG. 3 depicts an example process for developing ontology-based analytics.

FIG. 4A is representation of a phenomenon layer of a knowledge graph.

FIG. 4B depicts an example risk propagation ontology.

FIG. 5A depicts an example ontology-based graph transformation.

FIG. 5B depicts an example knowledge graph including process dependencies.

FIG. 6A depicts a knowledge graph for a use case of implementations of the present disclosure.

FIG. 6B shows an example of a data extraction output from a knowledge graph.

FIG. 6C shows an example of risk propagation output from a knowledge graph.

FIG. 7 depicts an example user interface for a use case of implementations of the present disclosure.

FIG. 8 depicts an example process that can be executed in accordance with implementations of the present disclosure.

Like reference symbols in the various drawings indicate like elements.

## DETAILED DESCRIPTION

Implementations of the present disclosure are directed to mitigating risk in enterprise networks. More particularly, implementations of the present disclosure are directed to executing risk propagation analytics over a digital twin in a domain-agnostic manner.

In some examples, implementations of the present disclosure are provided as a process for evaluating risk propagation of networks using a digital twin. A digital twin is a digital representation of a physical object, process, or service. The disclosed techniques can be implemented to enable computation and execution of risk analytics over digital twins represented by a knowledge graph in a domain-agnostic manner and in a way that enables identifying root causes of risk. An example system executes risk propagation analytics in a generic manner, regardless of the specific digital twin's ontological and data domain. For instance, in a cyber domain, there is a need to propagate risk from cyber impacts through cyber assets to processes. In a production domain, there is a need to propagate risk from activities through sub processes to parent processes. Furthermore, each domain may have different relevant risk aspects. For instance, in the cyber domain, an attacker could trigger an impact over asset's confidentiality. In the production domain, a problem with an asset or process could impact the quality of the resulting product.

To provide context for implementations of the present disclosure, and as introduced above, computer networks are susceptible to attack by malicious users (e.g., hackers). For example, hackers can infiltrate computer networks in an effort to obtain sensitive information (e.g., user credentials, payment information, address information, social security numbers) and/or to take over control of one or more systems. Computer networks are used to execute processes that support operations of enterprises and/or industrial infrastructures. Enterprises, in general, and industrial infrastructures, in particular, are increasingly connected to external networks such as the Internet. As such, processes that were once isolated from the open Internet network, are now vulnerable to external cyber-attacks. As the frequency and derived impact of these attacks increase, there is a need to prioritize and mitigate risks in order of importance to the operations.

In an effort to defend against cyber-attacks, knowledge graphs can be generated, which represent potential lateral movements of adversaries within computer networks. A knowledge graph can be used to understand how a computer network can be hacked and undesirable consequences that can result. Accordingly, knowledge graphs can be described as an important tool in developing anti-hacker defenses. For example, a knowledge graph can be used to identify the most vulnerable components within a computer network, and can be used to evaluate fixes of vulnerabilities that the knowledge graph reveals (e.g., by fixing a limited number of issues, any adversary attack on the computer network, or on certain components in the computer network can be stopped). While much research has been dedicated to the analysis of a single knowledge graph, little focus has been given to the analysis and comparison of multiple knowledge graphs. In comparing multiple knowledge graphs, the difference between the knowledge graphs is a target of interest, as differences can reveal vulnerabilities that were added, were removed or that persisted across all knowledge graphs.

In view of the above context, implementations of the present disclosure are directed to prioritizing remedial actions for cyber security. More particularly, implementations of the present disclosure are directed to automated process-aware recommendation of remedial actions to mitigate cyber security. As described in further detail, prioritization of remedial actions can include determining a risk assessment based on a knowledge graph, and generating a prioritized list of remedial actions based on the risk assessment and a risk tolerance profile, the prioritized list of remedial actions being generated by a mitigation simulator.

In some examples, automated prioritization of remedial actions of the present disclosure can be realized within an agile security platform that considers attack complexity within an interconnected cyber infrastructure with a variety of attack paths to comprehensively address real attack scenarios. It is contemplated, however, that implementations of the present disclosure of the present disclosure can be realized in any appropriate cyber security platform.

In general, the agile security platform provides a cyber-threat analysis framework based on characterizing adversarial behavior in a multi-stage cyber-attack process. As described in further detail herein, how a threat proceeds within a network is investigated using a knowledge graph and all possible attack stages are identified. In some implementations, each stage can be associated with network attributes. Using a holistic view of threat exposure provided by knowledge graphs, attack techniques and tactics are incorporated into stepping stones found in knowledge graphs.

In further detail, the cyber-threat analysis framework adds context to each attack stage using a real-world knowledge base of adversary tactics and techniques to more comprehensively characterize progression along the attack path. In some implementations, an attack path analysis model identifies a level of difficulty in taking a path by considering the complexity of the path, the skill set of the attacker, and the like. Implementations of the present disclosure provide a path hardness that is measured in terms of a capability of the attacker and challenges. The insight into the level of difficulty of an attack path in the network helps security administrators to pinpoint critical paths and prioritize path hardening actions.

As described herein, the agile security platform enables continuous cyber and enterprise-operations alignment controlled by risk management. The agile security platform improves decision-making by helping enterprises to prioritize security actions that are most critical to their operations. In some examples, the agile security platform combines methodologies from agile software development lifecycle, IT management, development operations (DevOps), and analytics that use artificial intelligence (AI). In some examples, agile security automation bots continuously analyze attack probability, predict impact, and recommend prioritized actions for cyber risk reduction. In some examples, agile security systems automatically implement actions for cyber risk reduction. In this manner, the agile security platform enables enterprises to increase operational efficiency and availability, maximize existing cyber security resources, reduce additional cyber security costs, and grow organizational cyber resilience.

As described in further detail herein, the agile security platform provides for discovery of IT/OT supporting elements within an enterprise, which elements can be referred to as configuration items (CI). Further, the agile security platform can determine how these CIs are connected to provide a CI network topology. In some examples, the CIs are mapped to processes and services of the enterprise, to determine which CIs support which services, and at what stage of an operations process. In this manner, a services CI topology is provided.

In some implementations, the specific vulnerabilities and improper configurations of each CI are determined and enable a list of risks to be mapped to the specific IT/OT network of the enterprise. Further, the agile security platform of the present disclosure can determine what a malicious user (hacker) could do within the enterprise network, and whether the malicious user can leverage additional elements in the network such as scripts, CI configurations, and the like. Accordingly, the agile security platform enables analysis of the ability of a malicious user to move inside the network, namely, lateral movement within the network. This includes, for example, how a malicious user could move from one CI to another CI, what CI (logical or physical) can be damaged, and, consequently, damage to a respective service provided by the enterprise.

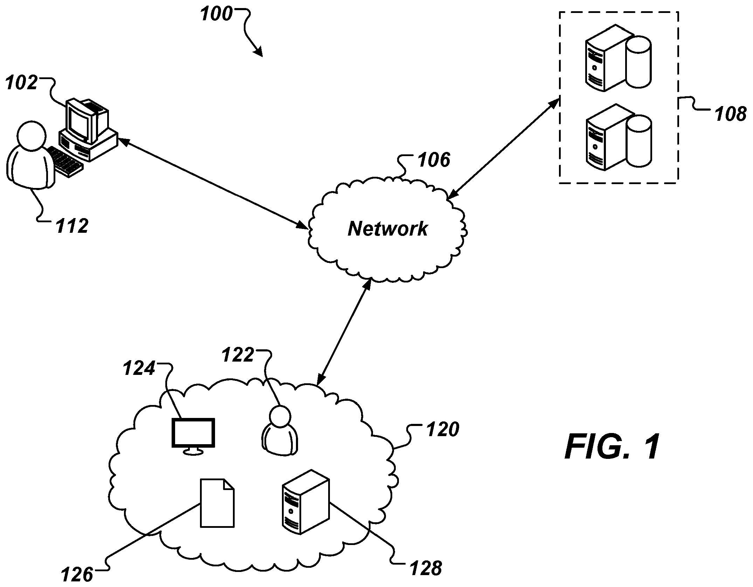

FIG. 1 depicts an example architecture 100 in accordance with implementations of the present disclosure. In the depicted example, the example architecture 100 includes a client device 102, a network 106, and a server system 108. The server system 108 includes one or more server devices and databases (e.g., processors, memory). In the depicted example, a user 112 interacts with the client device 102.

In some examples, the client device 102 can communicate with the server system 108 over the network 106. In some examples, the client device 102 includes any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In some implementations, the network 106 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In some implementations, the server system 108 includes at least one server and at least one data store. In the example of FIG. 1, the server system 108 is intended to represent various forms of servers including, but not limited to a web server, an application server, a proxy server, a network server, and/or a server pool. In general, server systems accept requests for application services and provide such services to any number of client devices (e.g., the client device 102 over the network 106). In accordance with implementations of the present disclosure, and as noted above, the server system 108 can host an agile security platform.

In the example of FIG. 1, an enterprise network 120 is depicted. The enterprise network 120 represents a network implemented by an enterprise to perform its operations. In some examples, the enterprise network 120 represents on-premises systems (e.g., local and/or distributed), cloud-based systems, and/or combinations thereof. In some examples, the enterprise network 120 includes IT systems and OT systems. In general, IT systems include hardware (e.g., computing devices, servers, computers, mobile devices) and software used to store, retrieve, transmit, and/or manipulate data within the enterprise network 120. In general, OT systems include hardware and software used to monitor and detect or cause changes in processes within the enterprise network 120 as well as store, retrieve, transmit, and/or manipulate data. In some examples, the enterprise network 120 includes multiple assets. Example assets include, without limitation, users 122, computing devices 124, electronic documents 126, and servers 128.

In some implementations, the agile security platform is hosted within the server system 108, and monitors and acts on the enterprise network 120, as described herein. More particularly, and as described in further detail herein, one or more knowledge graphs representative of the enterprise network are generated in accordance with implementations of the present disclosure. For example, the agile security platform detects IT/OT assets and generates an asset inventory and network maps, as well as processing network information to discover vulnerabilities in the enterprise network 120. The agile security platform executes automated prioritization of remedial actions of the present disclosure based on the network information.

In some examples, the agile security platform provides one or more dashboards, alerts, notifications and the like to cyber security personnel that enable the cyber security personnel to react to and remediate security relevant events. For example, the user 112 can include a cyber security expert that views and responds to dashboards, alerts, and/or notifications of the agile security platform using the client device 102.

In some examples, the agile security platform operates over multiple phases. Example phases include an asset discovery, anomaly detection, and vulnerability analysis phase, a cyber resilience risk analysis phase, and a cyber resilience risk recommendation phase.

With regard to the asset discovery, anomaly detection, and vulnerability analysis phase, discovering what vulnerabilities exit across the vertical stack and the relevant use cases is imperative to be conducted from the enterprise IT to the control systems. A focus of this phase is to generate the security backlog of issues, and potential remediations.

Rather than managing each technology layer separately, the agile security platform addresses lateral movements across the stack. Through devices, communication channels (e.g., email, TCP/IP), and/or operation systems, vulnerabilities are addressed within the context of a service (e.g., a service that the enterprise offers to customers), and a cyber kill chain to a target in the operation vertical, generating operation disturbance by manipulation of data. The notion of a CI assists in mapping dependencies between IT/OT elements within a configuration management DB (CMDB). A so-called security CI (SCI) maps historical security issues of a certain managed security element and is mapped into a security aspect of a digital twin.

As a result, a stack of technologies is defined, and is configured in a plug-in reference architecture (replaceable and extensible) manner. The stack addresses different aspects of monitoring, harvesting, and alerting of information within different aggregations views (dashboards) segmented according to owners and relevant IT and security users. An example view includes a health metric inserted within the dashboard of an enterprise application. In some examples, the health metric indicates the security condition of the underlying service and hence, the reliability of the provided data and information. Similar to risks that can be driven by labor, inventory, or energy, security risk concern can be presented and evaluated in the operations level, drilled-through for additional transparency of the issue, and can be optimally remediated by allocating investments to automation or to security and IT personal with adequate operations awareness.

With regard to the cyber resilience risk analysis phase, each vulnerability may have several remediations, and each has a cost associated with it, either per internal personnel time, transaction, service, or retainer, as well as the deferred cost of not acting on the issue. A focus of this phase is to enable economical decision-making of security investments, either to be conducted by the IT and security team or directly by automation, and according to risk mitigation budget.

In further detail, observing a single-issue type and its remediations does not reflect the prioritization between multiple vulnerabilities. Traditional systems are based on global risk assessment, yet the context in which the SCI is part of is missing. The overall risk of a process matters differently for each enterprise. As such, remediation would occur according to gradual hardening of a process according to prioritization, driven in importance and responsibility by the enterprise, not by gradual hardening of all devices, for example, in the organization according to policy, without understanding of the impact on separated operational processes. Hardening of a system should be a decision of the enterprise to drive security alignment with the enterprise.

In addition, as the system is changed by gradual enforcement and hardening, new issues are detected and monitored. Hence, making a big bang decision may be not relevant to rising risks as they evolve. Prioritization according to value is the essence of this phase. It is a matter of what is important for the next immediate term, according to overall goals, yet considering changes to the environment.

With regard to the cyber resilience risk recommendation phase, a focus is to simplify approved changes and actions by proactive automation. In traditional systems, the action of IT remediation of security issues is either done by the security team (such as awareness and training), by creating a ticket in the IT service system (call for patch managements), and/or by tools that are triggered by security and monitored by IT (automatic deployment of security policies, change of authentication and authorization, self-service access control management, etc.). Some operations can be conducted in a disconnected mode, such as upgrading firmware on an IoT device, in which the operator needs to access the device directly. Either automated or manual, by IT or by security, or by internal or external teams, the entire changes are constantly assessed by the first phase of discovery phase, and re-projected as a metric in a context. Progress tracking of these changes should also occur in a gradual manner, indicating maintenance scheduling on similar operational processes, hence, driving recommendations for frequent actions that can be automated, and serve as candidates to be self-managed by the operations owners and systems users.

In the agile security platform, acting is more than automating complex event processing (CEP) rules on alerts captured in the system logs and similar tools. Acting is started in areas highlighted according to known patterns and changing risks. Pattern detection and classification of events for approved automation processes (allocated transactions budget), are aimed at commoditization of security hardening actions in order to reduce the attention needed for prioritization. As such, a compound backlog and decision phase, can focus further on things that cannot be automated versus those that can. All issues not attended yet are highlighted, those that are handled by automation are indicated as such, and monitored to completion, with a potential additional value of increasing prioritization due to changing risks impact analysis.

The application of graph algorithms to assess the risk spreading level in a system is commonly known as risk propagation. Risk propagation approaches can be used in risk analytics and networks of nodes representing a system, and are aimed at supporting risk identification, quantification, and mitigation activities.

Risk propagation techniques can be applied in different domains where processes play a central role. For instance, risk propagation can be adopted to analyze how occurrences of risk affect the sustainability of producer-consumer networks in supply chains. Similarly, the propagation of risk is used to assess the impact of cyber-attacks on different assets of a given system. The risk propagation solution can be used to measure the cascading effect of risk in systems that involve dependencies between processes and physical objects. For instance, cybersecurity risk can be propagated from a cyber infrastructure to the processes of an organization. A machine breakdown can affect the productivity of a company. Lead-time variability risk can affect a supply chain or a manufacturing environment. The risk of machinery energy consumption deviation from the allowed thresholds can be calculated and propagated to the risk to the processes of the host organization.

A process-aware approach can be implemented to evaluate risk propagation. The approach leverages knowledge about how different processes, objects, and activities connect with each other, in domain-specific contexts (e.g., customer relationships, enterprise planning, cyber assets, and supply chain), and also at a domain-agnostic level, by covering concepts that are present in different application contexts. process-aware approach that is aimed at facilitating the assessment of risk propagation between processes and objects with different levels of abstraction.

The contribution leverages the combination of an ontology, which supports semantics-based intelligent systems, encoding a set of rules to be used for representing the risk dependencies within a system composed of objects and processes, and ii. a method to calculate the propagation of risk within the represented system.

The approach facilitates the task of propagating a risk that was measured at the physical level of a system (e.g., a machine breakdown), towards its process abstract level (e.g., company productivity). This involves the capability to investigate how an attacker can compromise both the infrastructure assets and the process goals of an organization.

The approach enables users to easily assess risk and, in particular, to easily access the risk propagation output. Visualization support is provided to enable a user to browse and analyze the data. The output can be filtered according to user-input queries.

The approach can support identifying the root causes of risk, prioritizing the mitigation activities, and suggesting a relevant remediation plan. The approach keeps track of risk propagation over time. For instance, the risk propagation can change after applying a mitigation step. For the same processes and objects, there may be different risk propagation phenomena at different times.

The approach allows discovering elements that are at risk even if they are not directly connected. This can happen by considering different types of relations between elements at risk, like causal dependencies or physical connections. The approach enables the propagation of risk when an element is a part of a causal chain or a component of a device.

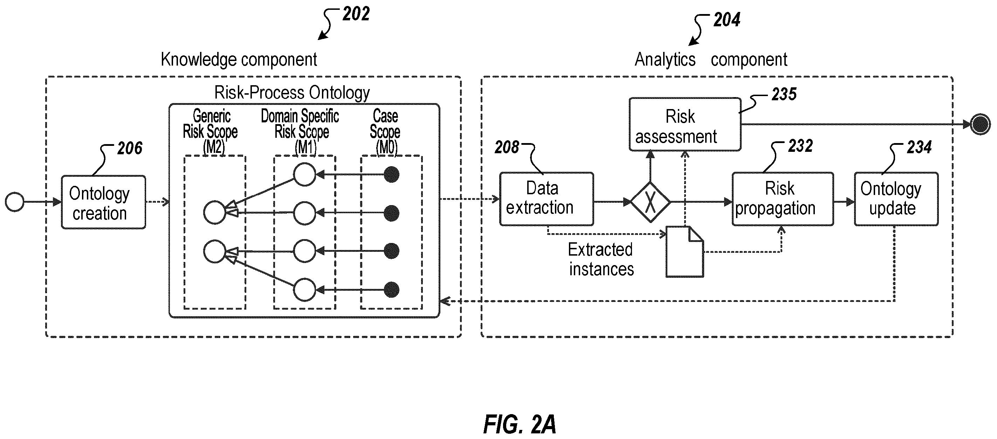

FIG. 2A depicts a process for performing risk propagation analytics using domain-specific concepts. The process includes a knowledge component 202 and an analytics component 204.

Risk can be used to quantify the possibility of reaching some given objectives, where such a quantity value is derived from the combination of the probability that a certain risk event occurs (as a perturbation of the plan for reaching the objectives) and a set of severity values. For example, an attacker may have read/write access to a database and can damage the database integrity and confidentiality. The read/write access represents the risk event, and the severity values will be associated with the database integrity and confidentiality features.

Risk can be considered an effect of uncertainty on objectives. Risk is a polysemic term, which covers multiple phenomena including risk magnitude, risk assessment, vulnerability, loss and threat events, etc.

Risk can be calculated as $R = P * (S1, ..., Sn)$, where $P$ provides the probability that a risk event occurs, and each $Sj$ encodes a severity value. The propagation task can start from a given risk value, associated to a given risk event (e.g., damage to a device). The risk associated with the risk event can spread through the elements (e.g., objects and processes) involved, either directly or indirectly, in the event itself.

The knowledge component 202 can be deployed on a graph database platform. The analytics component 204 can be implemented as an application that interacts with the graph database platform.

The program and the database interact at multiple stages. First, the ontology is imported into the database (e.g., ontology creation 206). Second, the export from the database into the program memory towards the risk propagation task (e.g., data extraction 208). Thirdly, the database is updated with results of risk propagation 232 (e.g., ontology update 234). Lastly, risk assessment 235 is performed using the updated ontology.

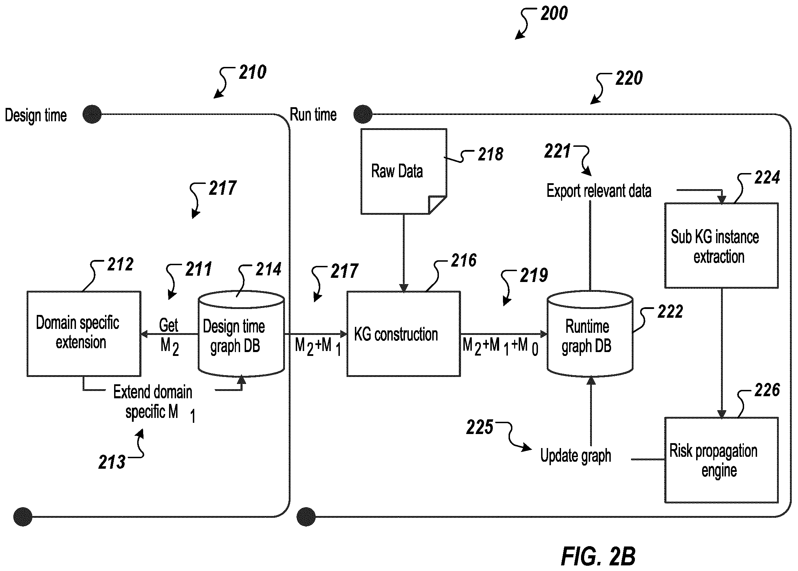

FIG. 2B depicts a conceptual architecture 200 for performing risk propagation analytics using domain-specific concepts applied to generic ontologies. The system architecture 200 is divided into two modules, including a design time module 210 and a run time module 220.

The design time module 210 performs ontology mapping by extending base phenomenon (by inheritance) into a domain-specific ontology. For example, the design time module 210 can obtain an $M_2$ layer $_2$11 and create an $M_1$ 213 layer by applying a domain specific extension 212. The $M_1$ and $M_2$ layers can be stored in a design time graph database 214.

Once the domain-specific ontology is created, the run time module 220 can perform knowledge graph construction 216 using the $M_1$ and $M_2$ layers 217. KG construction 216 maps the $M_0$ layers to the $M_1$ and $M_2$ layers. The run time module 220 can use raw data 218 to construct a knowledge graph instance (subject to $M_1$).

The knowledge graph instance 219, including $M_0$, $M_1$, and $M_2$ layers, can be imported into a runtime graph database 222. The ontology model's concepts, relations, and attributes are expressed as classes, object properties, and

data properties, respectively. $M_0$ can be expressed as classes' individuals and their properties assertions. Once the OWL file of the three scopes is constructed, the ontology is imported to the runtime graph database 222. The Owl file can be transformed into a Labeled Property Graph (LPG). structure. In this structure, the constructs of the model and the data are represented as nodes and edges within the runtime graph database 222.

The run time module 220 performs multi-stage risk propagation calculations. The calculations are performed to determine the propagation of risk within a given system. The run time module 220 exports relevant data 221 from the runtime graph database 222 by performing a sub-knowledge graph instance extraction 224.

A risk propagation engine 226 receives the sub-knowledge graph in a standard format of a graph structure. At this stage only relevant data ($M_0$ level), extracted using an $M_2$ level query, is included in subgraphs provided to the risk propagation engine 226. The subgraphs can include a first subgraph for hierarchy relators, and a second subgraph for process dependency relators. The risk propagation engine 226 performs risk propagation analysis using the relevant data from the runtime graph database 222 provided in the subgraphs. The risk propagation engine 226 updates the knowledge graph 225 according to the risk propagation results.

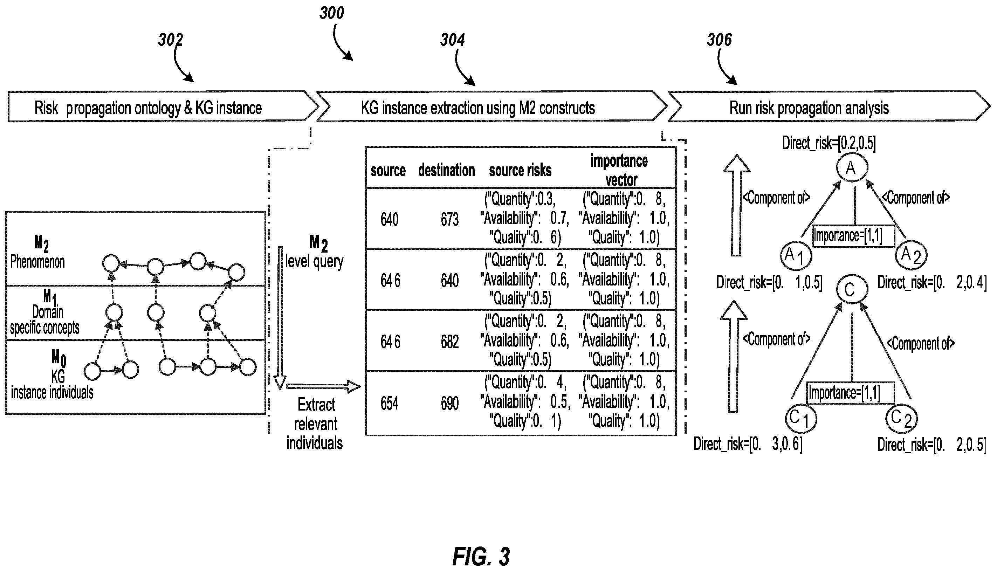

FIG. 3 depicts an example process 300 for developing ontology-based analytics. The process 300 can be implemented in order to run advanced analytics (e.g., risk propagation analytics) in a domain-agnostic manner by developing ontology-based analytics. An ontology supports functionalities typical of semantics-based intelligent systems, representing a system with processes and objects having different levels of abstraction.

The process 300 includes three main steps. The first step 302 includes using a mapping ontology editor tool to create a multi-layer ontology. The $M_2$ layer represents phenomenon concepts, and the $M_1$ layer represents domain-specific concepts. The $M_2$ layer and the $M_1$ layer are mapped to a knowledge graph instance $M_0$.

The second step 304 includes automatically extracting relevant nodes from $M_0$ into a standard structure according to an $M_2$ level query.

The third step 306 includes running risk propagation analysis using an analytics component to compute step-wise and aggregated risks to be displayed. The ontology-based risk propagation includes three primary components: mapping, knowledge graph construction, and multi-stage risk propagation calculations. The process 300 can be applied to various domains and use cases, including cyber-security and production use cases.

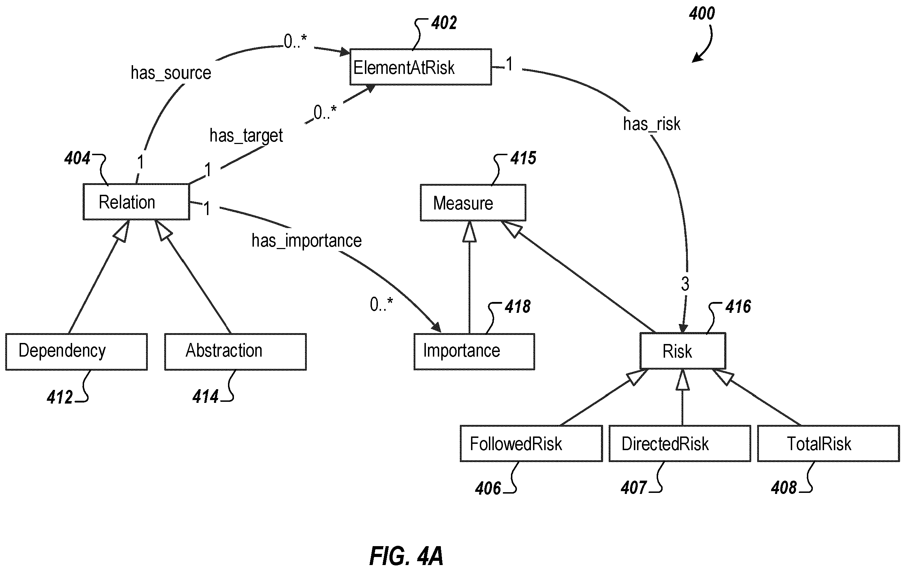

FIG. 4A is representation of a phenomenon layer 400 of a knowledge graph. The knowledge component holds an ontology (Risk-Process Ontology), which is in turn divided into three scopes. The first scope, M2, includes a set of generic concepts and relations related to risk, which are independent of any specific domain. The second scope, M1, extends M2 with a set of domain-specific concepts and relations. M1, is then mapped into the third scope M0, includes a use-case-specific types and instances.

The phenomenon layer includes an Element at Risk 402. The Element at Risk 402 can be, for example, a process type at risk or an object at risk. In some examples, an Element at Risk 402 can be specialized in a domain-specific layer by a concept representing a physical component of a system, such as a machine, or an abstract concept such as an activity.

Within a system of Element at Risk 402, the risk 416 is propagated from one element to another according to their relations 404. In order to model risk propagation, two main types of relations 404 are identified. Relations 404 can include dependency relations 412, which can be used to model phenomena where the risk 416 is propagated through a workflow composed of processes. For instance, two activities can be connected by dependency relations 412 such as "triggers" or "causes." Relations 404 can include abstraction relations 414 that represent cases where the risk 416 is propagated from a lower to a higher level of abstraction. For example, the risk of a physical machine can be propagated to related activities.

Given a network of elements at risk 416 and their connections, various types of risk can be identified. A type of risk is Followed Risk 406, or indirect risk. Followed Risk 406 is risk propagated through dependency relations. Another type of risk is Directed Risk 407. Directed Risk 407 is risk propagated through abstraction relations. Another type of risk is Total Risk 408. Total Risk 408 represents the overall risk of an object, considering both the Directed Risk 407 and Followed Risk 406.

The knowledge component is aimed at supporting risk calculation from different perspectives and aspects, which can be represented within M2. For example, in a cybersecurity use case, the risk can be quantified according to its potential impact on availability, confidentiality, and integrity of the related activities. In a sustainability use-case, the risk of a carbon-footprint can be propagated by focusing on the deviation from the machine level to the process level. Finally, the knowledge component allows the user to control the amount of risk propagated from one element to another via one or more measures 415. Measures can include importance 418, which can be used to weight any given relation 404. For example, a confidentiality risk that was measured over a device and propagated to its correlated activity should not necessarily be propagated to the following activity. In that case, the system supports omitting the propagation of a confidentiality risk from an activity to the following by setting an importance of zero.

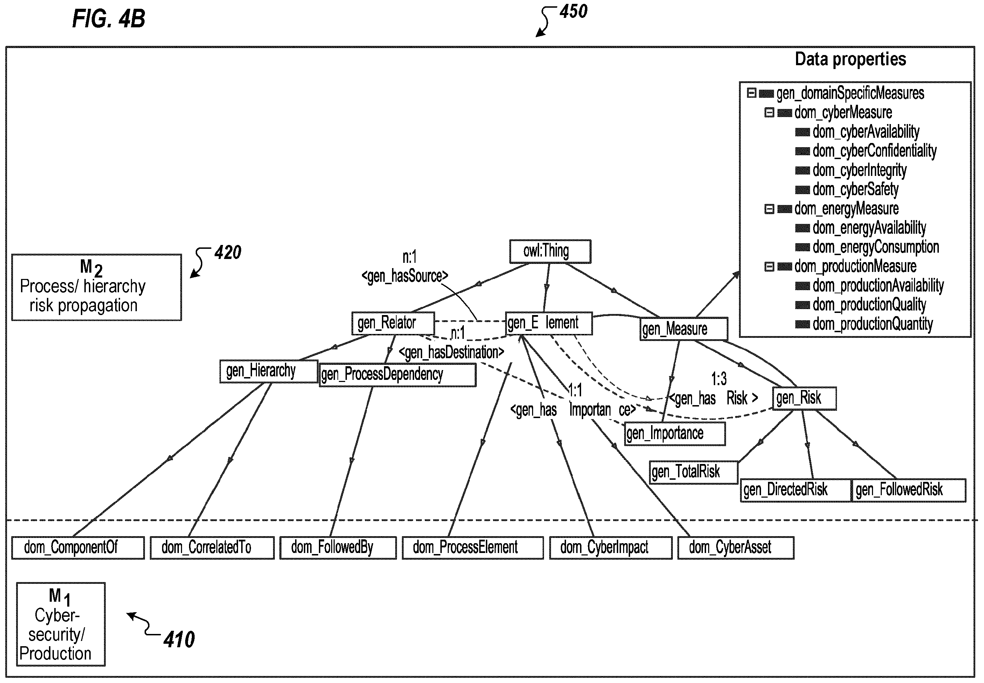

FIG. 4B depicts an example mapping of risk propagation ontology 450. The ontology 450 includes an $M_1$ ontology layer 410 and an $M_2$ ontology layer 420. The ontology 450 can be generated, for example, by the design time module 210 of the architecture 200.

The $M_2$ ontology layer 420 is a phenomenon layer. The $M_2$ ontology layer 420 holds generic, abstracted classes, properties, and relations which could be extended by the $M_1$ layer by inheritance. The $M_1$ ontology layer 410 is a domain-specific layer. The $M_1$ ontology layer 410 can include case-specific classes, properties, and relations.

The $M_1$ ontology layer 410 and an $M_2$ ontology layer 420 can enable a domain-agnostic system for creating ontologies and evaluating risk propagation. For example, the system can use $M_2$ level processing too retrieve $M_1$ results. In an example risk propagation task, risk can be propagated through all the instances of an element. There may be multiple types of elements, such as cyber asset, cyber impact, and process element.

The ontology 450 can be provided to the run time module 220 of the architecture 200. The run time module 220 can perform knowledge graph construction using the ontology 450 and raw data 218. The knowledge graph can be created from the raw data 218, according to $M_1$ ontology, and stored in the runtime graph database 222. The knowledge graph can be created by running over the raw data and extracting entities and relations. An output is a knowledge graph instance 219 subject to $M_1$, such that the knowledge graph instance 219 is specific to the domain specified by the $M_1$ layer.

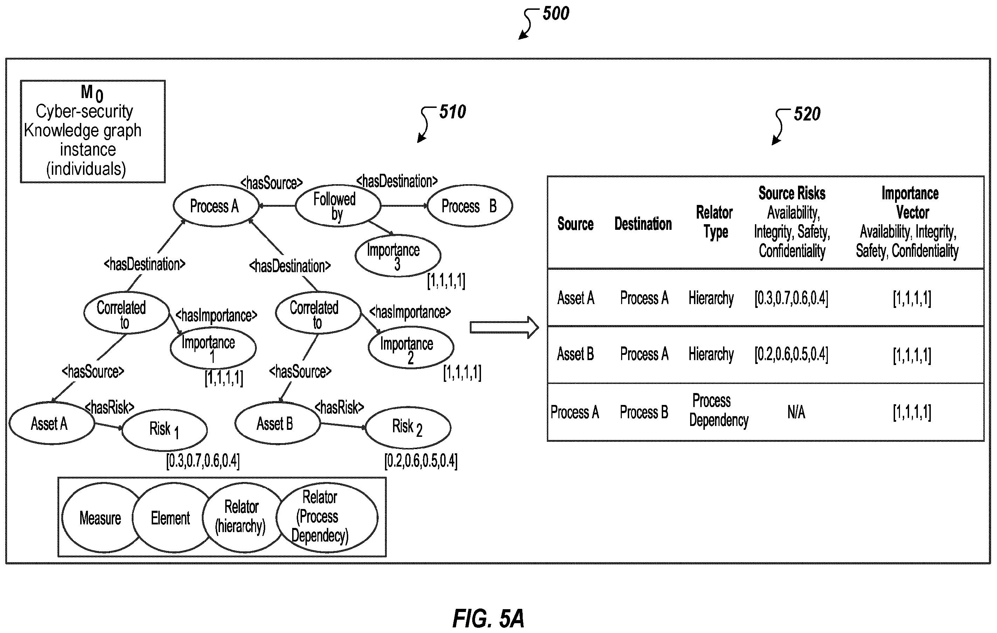

FIG. 5A depicts an example ontology-based graph transformation 500. The graph transformation 500 is performed on a sub-knowledge graph 510.

The sub-knowledge graph 510 can be generated, e.g., by the run time module 220 performing sub-knowledge graph instance extraction 224. Input to the sub-knowledge graph instance extraction 224 includes a knowledge graph instance from the runtime graph database 222, subject to the domain-specific concepts of the $M_1$ layer. Output from the sub-knowledge graph instance extraction 224 includes subgraphs of knowledge graph instance, e.g., sub-knowledge graph 510, in a standardized format.

Once the Risk-Process ontology is generated, the analytics component 204 is used for a data extraction step that consists of querying the ontology through the M2 constructs. The data extraction step returns a labeled property graph structure where each node represents an instance of an Element at Risk and each edge represents an instance of a Relation. The Risk and Importance values are then represented as vectorized properties of nodes and relationships respectively.

The example graph transformation 500 illustrates a transformation based on a query to get all individuals of type "Element" that have a relator type of "Hierarchy" or "Process Dependency," including their "Risk" and "Importance." The query extracts the required information to input to risk propagation algorithm (e.g., risk propagation engine 226).

The result of the transformation is table 520 including the obtained elements and associated sources, destinations, relator types, source risks, and importance vectors. The proposed approach assumes that the risk over the leaf nodes (elements with a lower level of abstraction) is given prior to the risk propagation task.

The table 520 is an example sub-knowledge graph instance extraction 224, as shown in FIG. 2B. The sub-knowledge graph instance extraction 224 is input to the risk propagation engine 226.

Once the labeled property graph is generated, risk propagation can be performed. This task is performed in two steps, where, at each step, the graph is traversed via a Depth-first Search (DFS) algorithm. A risk propagation for a single node is in turn defined according to a risk function denoted as max_per_aspect. A worst-case scenario approach can be applied by quantifying the risk according to the maximal risk per aspect. For example, in a case where an activity depends on two devices, and each has a different availability risk. A worst-case scenario approach assumes that both devices could be compromised by an attacker, and a shutdown of at least one device will disable the correlated activity. Thus, the propagated risk towards the activity is set according to the maximal availability risk of both devices. The risk function gets a bag of vectors ordered by the different risk aspects and returns the maximal value for each aspect.

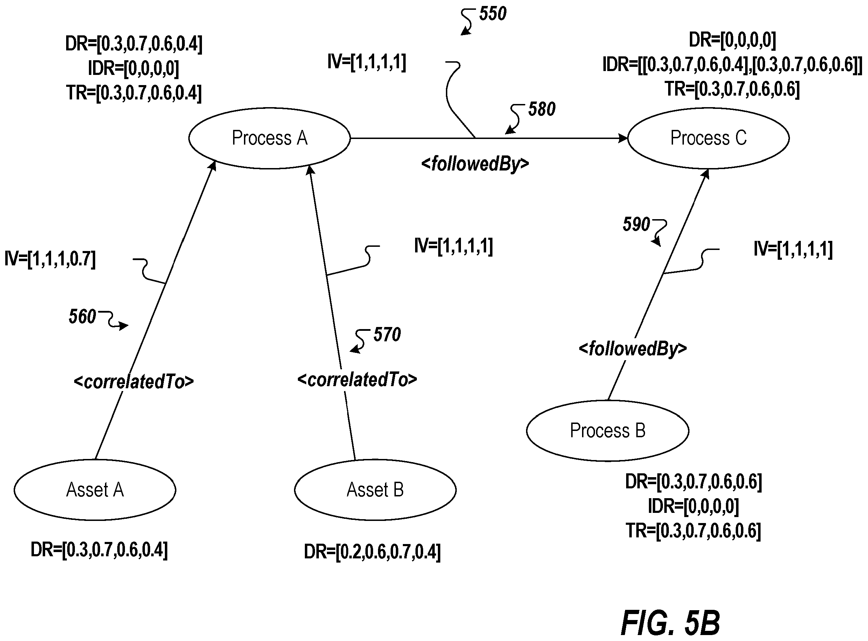

FIG. 5B depicts an example knowledge graph 550 including process dependencies. The knowledge graph can be evaluated using a multi-stage risk propagation engine, e.g., risk propagation engine 226. Input to the risk propagation engine 226 can include subgraphs of a knowledge graph instance in a standardized format. Output from the risk propagation engine 226 can include an updated knowledge graph 225 with propagated risk.

The knowledge graph 550 includes nodes representing Asset A and Asset B, and nodes representing process elements A, B, and C. The knowledge graph 550 permits risk assessment at a process level.

The knowledge graph 550 also includes connections representing process dependencies between assets and processes, and dependencies between process elements. For example, the knowledge graph 550 includes a connection 560 representing a correlation between Asset A and Process A, and a connection 570 representing a correlation between Asset B and Process A. The knowledge graph 550 includes a connection 580 representing that Process C follows Process A, and a connection 590 representing that Process C follows Process B.

The knowledge graph 550, includes process element nodes, can be used to account for risk propagation through various types of dependencies between process elements. For example, for each process element node, a direct risk (DR), indirect risk (IDR), and total risk (TR).

For each connection of the knowledge graph 550, an importance vector (IV) can be assigned. The IV is a transformation vector of the risk from one element to another element. The IV indicates an amount of the risk that is to be carried from one node to a connected node. The IV represents an amount of risk propagated between nodes connected by an edge of the knowledge graph.

For each node of the knowledge graph 550, a set of incoming nodes (IN) can be determined. For example, for the process element node for Process C, the set of incoming nodes includes Process A and Process B.

The vectors for each node includes the Directed Risk vectors of the incoming nodes, multiplied by the corresponding Importance Vectors over the incoming edges. The multiplication is element wise, namely, each element in the Directed Risk vector is multiplied with the corresponding element in the Importance vector.

Direct risk is a risk vector that is measured directly over an element and propagated to its connected nodes. The following example relationship is provided:

$$DR=\text{max\_aspect}(IV*DR \text{ for } IV, DR \text{ in } IN)$$

where:

> DR - Direct Risk
> IV - Importance Vector
> IN - Set of Incoming Nodes

Once the Directed Risk is propagated across the graph, the second step occurs according to two main sub-steps. The Followed Risk vector of a node is calculated. The vectors for each node include the Total Risk vectors of its incoming nodes multiplied by the corresponding importance vectors over the incoming edges.

Indirect risk, or followed risk, is an impact of a risk vector from an element to another that has process dependency relation. If the set of incoming nodes is zero, then indirect risk is zero and the importance vector is zero.

The Total risk of a node is calculated. The vectors for a node include its Followed Risk and Directed Risk vectors. Total risk is the overall risk vector over an element considering both direct and indirect risk vectors for the element. The following example relationship is provided:

$$TR=\text{max\_aspect } (DR, IDR)$$

The indirect risk for a following node is based on the total risk of incoming nodes. The following example relationship is provided:

$$IDR=[[IV*TR] \text{ for } IV, TR \text{ in } IN]$$

where:

> IDR - Indirect Risk
> IV - Importance Vector
> TR - Total Risk
> IN - Set of incoming nodes

The knowledge graph 550 can be traversed using an algorithm such as a depth-first search (DFS) algorithm. DFS is an algorithm for traversing or searching graph data structures. The algorithm starts at the root node (selecting some arbitrary node as the root node in the case of a graph) and explores as far as possible along each branch before backtracking. Input to the DFS algorithm includes the knowledge graph with source node and related child node, and a function to be applied. Output of the DFS algorithm includes the knowledge graph with propagated risk. Once the risk propagation task is concluded, the results are updated in the Risk-Process ontology.

For consideration of risk propagation, assumptions can be made. In some examples, an assumption is that a node can be represented only within a single graph level. Other assumptions can include that leaf nodes do not hold incoming edges, that each leaf node has a pre-defined direct risk which is domain-specific, and that risk propagation uses the same risk function across all graph levels. Additional assumptions can include that the methodology does not handle cycle, and that nodes are homogenous (e.g., nodes share the same risk aspects).

An example algorithm for multi-stage risk propagation is provided in Table 1:

Table 1

| ***Algorithm 1: Total risk calculation*** |
| --- |
| *Input: Graph G with source node (u) and incoming node (v) related with relation r, function to be applied* <br> *Output: Graph G with propagated risk* <br> $DR_u = f(DR_v, IV_r)$ |

(continued)

| Algorithm 1: Total risk calculation |
|---|

```
TR_u = f(DR_u, TR_v)
let dfs(node, func) be:
    let result be empty list
    for each child_node in
node:
        results += dfs(child, func)
    return func(node)
for node in G:
    dfs(node, DR_u)
for node in G:
    dfs(node, TR_u)
```

The risk propagation engine 226 takes subgraphs as an input and uses predefined and/or user defined functions to calculate the risk for each node resulting new graph with propagated risk. Direct risk and indirect risk can be represented by different subgraphs, thus it may be necessary to traverse a graph twice.

Finally, the analytics component 204 includes risk assessment. The ontology can be queried to assess and analyze the risk state of the whole system, namely the risk of the Element at Risk with the highest level of abstraction. Furthermore, through the risk assessment step, an alert can be presented considering the deviation of the quantified risk from a pre-defined threshold (denoted as a cardinal risk).

Similarly, risk assessment can be implemented to analyze identify an element at cardinal risk, identify the risk's root causes, and prioritize mitigation steps accordingly. Still, the proposed approach enables the detection of elements at risk, even if their directly connected elements are not at risk. For example, a manual activity could be affected by a cyberattack since it is followed by another activity that depends on a device at risk of being compromised.

Risk assessment can be performed over elements including businesses, processes, and activities. For each element, a risk vector is generated. The vector enables prioritization of risks.

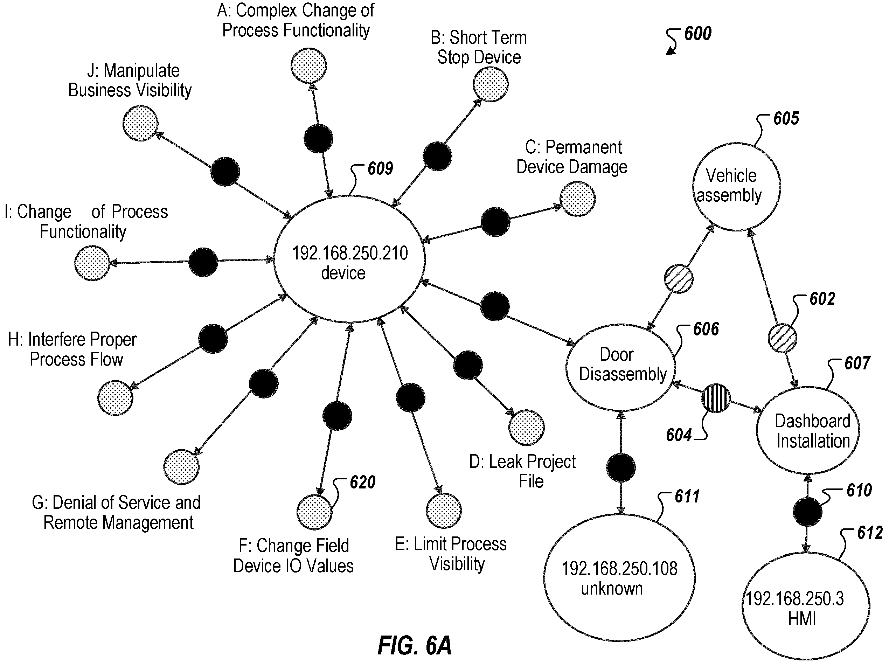

FIGS. 6A to 6C depict a use case of implementations of the present disclosure. FIGS. 6A to 6C demonstrate a cybersecurity risk assessment use case of a vehicle assembly manufacturing process. The example demonstrates techniques for quantifying the risk of devices being compromised by a cyberattack, and then measuring the impact over the domain-specific risk scope.

In the example of FIGS. 6A to 6C, the concepts captured by the ontology (e.g., M2 and M1) can be grouped into three groups. A first group is a physical layer including devices (denoted as CyberAsset) that could be compromised by an attacker. A second group includes potential intervention actions (denoted as Cyber-Impact), which an attacker could perform over each device. A third group includes processes (each one grouped as a ProcessElement). Cyber assets and process/activity elements are connected via relations of type CorrelatedTo. Process/activity elements are connected via relations of type ComponentOf and FollowedBy. The CorrelatedTo and ComponentOf relations are classified as Abstraction relations. The FollowedBy is classified as a Dependency relation.

Risk is measured over the different CyberImpact instances and propagated to CyberAsset and ProcessElement instances. Risk is measured according to aspects of confidentiality, integrity, and availability, and is represented in a risk vector. For example, a denial-of-service CyberImpact holds a substantial risk of availability, while a data manipulation Cyber-Impact holds a substantial risk of integrity and confidentiality. Since the risk is measured within an industrial facility, risk is also measured according to a safety aspect.

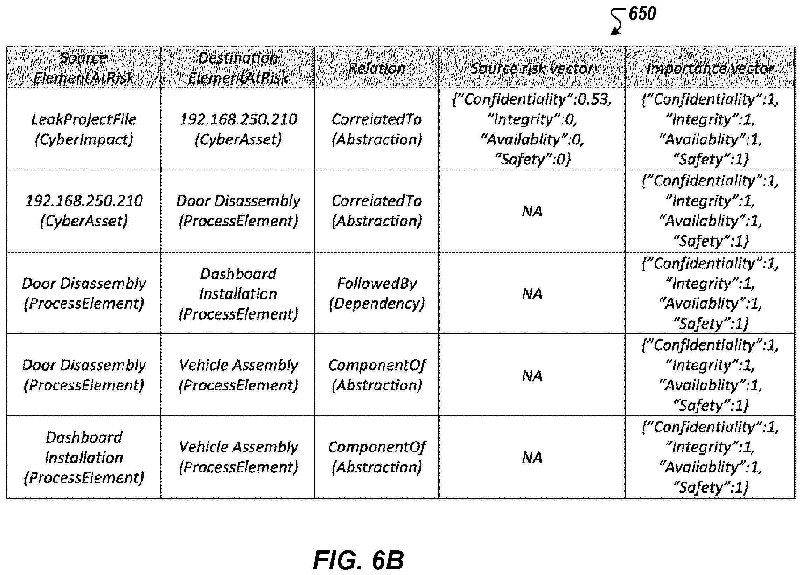

FIG. 6A shows a knowledge graph 600 instantiating M0 ontology concepts. FIG. 6B shows an example table 650 of the risk propagation output of the represented knowledge graph 600.

The knowledge graph 600 includes FollowedBy nodes (denoted as diagonally-patterned nodes 602) and ComponentOf nodes (denoted as vertically-patterned nodes 604). The FollowedBy nodes and the ComonentOf nodes represent relations between process elements. The process elements include VehicleAssembly element 605, Door-Disassembly element 606, and DashboardInstallation element 607).

The knowledge graph 600 provides cyber assets for each Process-Element as well. This is represented by the CorrelatedTo relation (denoted as black nodes 610) between process elements and cyber assets. For example, Door-Disassembly element 606 is connected with two CyberAsset instances 609, 611. The DashboardInstallation element 607 relates to just one CyberAsset instance 612.

The knowledge graph 600 encodes potential vulnerabilities of the selected cyber assets by connecting them to a set of threat instances, categorized as CyberImpact nodes (denoted as dot-patterned nodes 620). Each CyberImpact node is associated with a respective risk vector.

The knowledge graph 600 shows that the CyberAsset 609 is connected to ten CyberImpact instances, while the rest of the CyberAsset instances (e.g., CyberAsset instances 611, 612 in the knowledge graph 600 are not connected to any CyberImpact nodes. Thus, the CyberAsset instances 611, 612 can be considered as "secure."

Once the ontology is established, data extraction can be performed. A query can be executed to extract elements at risk and the relations that are relevant to the risk propagation task. The query uses M2 constructs to support various domain-specific entities and relations and returns a set of records encoding a relation between a source to a destination element, the risk vector over the source object, and the importance vector of the relation. FIG. 6B shows an example table 650 showing the data extraction output from a knowledge graph (e.g., knowledge graph 600). In the example table 650, an importance vector of one is used for all of the relation instances.

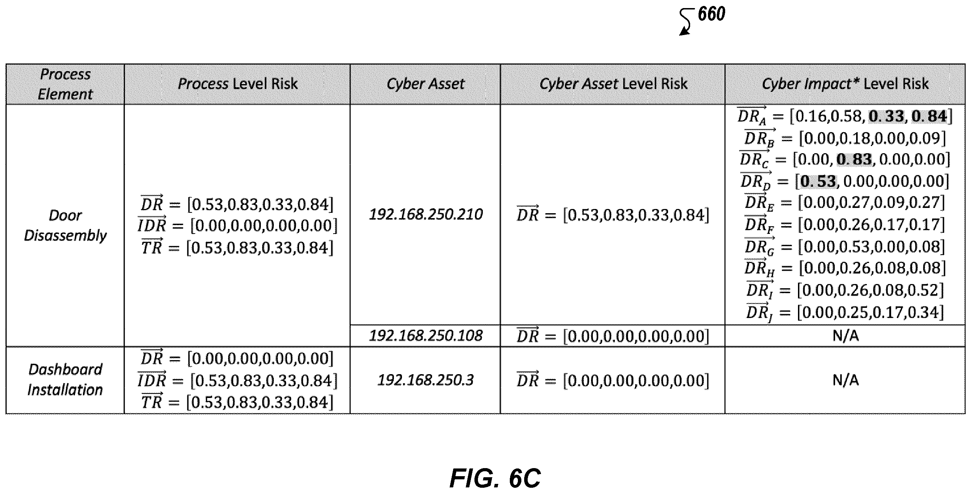

Referring to FIG. 6C, the data shown in Table 660 describes the output of the risk propagation task, from the CyberImpact objects to the CyberAsset objects, then to the ProcessElement objects given the M0 data extracted from the designed ontology. The far-right column of the table 660 encodes the risk vectors for the CyberImpact instances (i.e., the dot-patterned nodes in the example of Fig. 6). Each instance is labeled with a common potential threat in the cyber security context. For instance, a device may stop for a certain period of time (B), or a device may be damaged (C). Such a CyberImpact labeling is grounded on analysis on attack techniques for generic industrial control systems.

Referring to the Process Element nodes in Table 660, the "DoorDisassembly" ProcessElement has a DirectedRisk which is caused by three CyberImpact instances over the "192.168.250.210" Cyber-Asset (denoted in FIG. 6A as "Complex Change of Process Functionality" (A), "Permanent Device Damage" (C), "Leak Project File" (D)). In this example, there are three risk causes. This is due to the maximal risk per aspect, where, given a list of vectors, one total risk vector is formed out of the maximum values for each index across all values. Even though the "Dashboard Installation" ProcessElement is not affected directly by a cyber security risk, the approach can uncover that there is an indirect risk over the DashboardInstallation element derived through its FollowedBy dependency with the DoorDisassembly element.

As shown in FIGS. 6A to 6C, the combination of the generic, domain-specific, and case risk scope can be used to propagate a risk that was measured at the physical level of a system (e.g., a machine breakdown), towards its process abstract level (e.g., productivity).

The risk assessment step enables a user to browse, query, and analyze the input/output graphs. Due to the worst-case scenario approach, only the maximal risk is propagated between nodes. By adopting the maximal risk per aspect, the main causes of risk can be derived as a consequence of the propagation process. Thus, the disclosed techniques can be implemented to identify the root causes of risk, prioritize the mitigation activities, and suggesting a relevant remediation plan. The three scopes together cover physical and process level concepts. Through the exploitation of dependencies and abstraction relations, the approach is able to uncover implicit risk (e.g., followed risk) and direct risk (e.g., explicit risk).

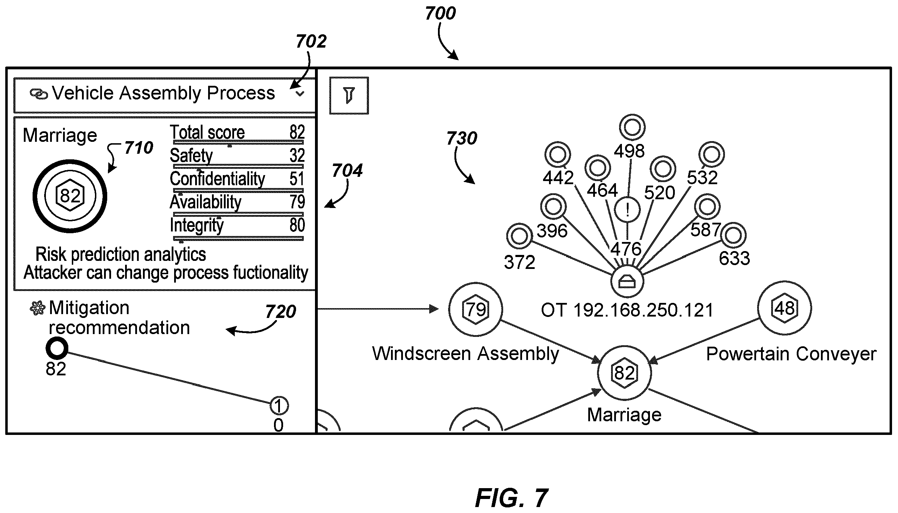

FIG. 7 depicts an example user interface 700 for a use case of implementations of the present disclosure. In a cyber domain use case, an attack could trigger an impact over asset's confidentiality. In a production use case, an attack could impact the quality of the resulting product. The example use case in FIG. 7 is a cyber security use case for vehicle assembly processes.

The user interface 700 includes a drop-down menu 702 for selection of vehicle assembly processes. The user interface 700 also provides a depiction of an ontology 730 for the vehicle assembly processes. The ontology 730 includes multiple elements identified by index numbers. The ontology 730 shows multiple processes (WindScreen Assembly, Powertrain Conveyer, Marriage), with each process associated with a respective total risk score. The ontology 730 shows an asset (OT 192.168.250.121) connected to CyberImpacts identified by index numbers.

The user interface 700 also provides a total risk score 710 for the selected process of "Marriage." The user interface 700 presents a report 704 of the risk assessment for the selected process. The report 704 includes a risk value for multiple different risk aspects, including safety, confidentiality, availability, and integrity. The report 704 shows a total risk score, which is a result of the risk scores of the different risk aspects. In the example report 704, higher risk values represent a greater level of risk.

The user interface 700 provides a mitigation recommendation 720 for reducing the risk score of the selected process. The example mitigation recommendation 720 includes a recommended action that would reduce the total risk score of the Marriage process from 82 to zero. In some examples, the mitigation recommendation 720 includes multiple recommended actions. In some examples, the mitigation recommendation 720 specifies a priority of the multiple recommended actions.

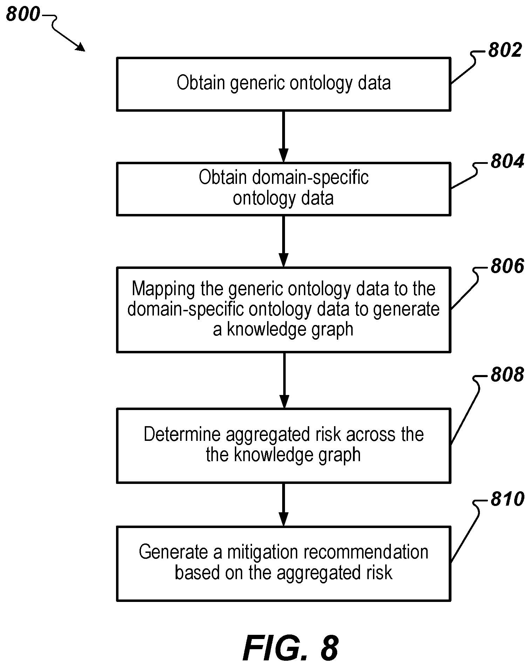

FIG. 8 depicts an example process 800 that can be executed in accordance with implementations of the present disclosure. In some implementations, the example process 800 may be performed using one or more computer-executable programs executed using one or more computing devices. The example process 800 can be performed, for example, by the server system 108 of the architecture 100.

Generic ontology data is obtained (802). For example, the design time module 210 can receive generic ontology data defined by an $M_2$ layer, and store the generic ontology data in the design time graph database 214.

Domain-specific ontology data is obtained (804). For example, the design time module 210 can apply the domain-specific extension 212 to the generic ontology data to generate domain specific ontology data defined by an $M_1$ layer.

The generic ontology data is mapped to the domain-specific ontology data to generate a knowledge graph (806). For example, the run time module 220 can perform knowledge graph construction 216 from the raw data 218 using the $M_1$ and $M_2$ layers 217. Thus, knowledge graph data defining a knowledge graph subject to the domain-specific ontology data is generated. The knowledge graph includes nodes and edges between the nodes. The nodes can include asset nodes representing assets and process nodes representing processes.

Each edge can represent a relation between nodes. Relations can include, for example, hierarchy relations, abstraction relations, and process dependency relations. A process dependency relation represents risk propagation through a workflow including multiple processes. A hierarchy relation represents risk propagation from an asset to a process that is correlated with the asset. An abstraction relation represents risk propagation from an asset to a process at a higher level of abstractions.

Aggregated risk is determined across the knowledge graph (808). For example, the risk propagation engine 226 can perform risk propagation analysis 232 across subgraphs of the knowledge graph to determine aggregated risk based on hierarchy and process dependency relationships. The aggregated risk can include multiple types of risk. For example, the aggregated risk can include an availability risk, a confidentiality risk, an integrity risk, and a safety risk. In some examples, the aggregated risk is represented by a vector including risk values for each of the availability risk, the confidentiality risk, the integrity risk, and the safety risk.

In some examples, aggregated risk is determined for a particular process represented by a particular process node of the knowledge graph. To determine the aggregated risk for the particular process, a direct risk is determined for the particular process based on relations between the particular process node and asset nodes of the knowledge graph. In some examples, determining the direct risk for the particular process includes identifying an edge representing a relation between the particular process node and an asset node. The edge may be associated with an importance vector representing an amount of risk propagated from the asset node to the particular process node. Direct risk can be determined by multiplying the importance vector by a risk associated with the asset node.

An indirect risk, or followed risk, is determined for the particular process based on relations between the particular process node and other process nodes of the knowledge graph. Determining the indirect risk for the particular process can include identifying an edge representing a relation between the particular process node and a second process node. The edge may be associated with an importance value representing an amount of risk propagated from the second process node to the first process node. Indirect risk can be determined by multiplying the importance value by a risk associated with the second process node.

The direct risk, indirect risk, and aggregated risk (e.g., total risk), can each be represented by a risk vector. A risk vector can include multiple risk values, with each risk value being associated with a different aspect of risk. Aspects of risk can include, for example, availability risk, confidentiality risk, integrity risk, and safety risk.

In some examples, determining the aggregated risk for the first process includes generating an aggregated risk vector from the direct risk vector for the first process node and the indirect risk vector for the first process node. The aggregated risk vector can be generated by selecting, for each of the different aspects of risk, the maximum risk value between the direct risk vector and indirect risk vector.

A mitigation recommendation is generated based on the aggregated risk (810). For example, the risk propagation engine 226 can output an updated knowledge graph 225 to the runtime graph database 222. The updated knowledge graph 225 can be used to identify recommended actions to reduce the aggregated risk. In some examples, the system executes actions included in the mitigation recommendation. In some examples, the system presents, through a user interface, a graphical representation of the updated knowledge graph 225 and an indication of the mitigation recommendation.

In some examples, a mitigation list is generated. For example, a mitigation simulator can execute a simulation based on the knowledge graph and output a mitigation list. The mitigation list can include a prioritized list of elements that can be mitigated to reduce risk. A set of remediation actions can be determined and/or executed. For example, one or more elements of the mitigation list can be mapped to at least one mitigation action. In some examples, an element-to-mitigation action mapping can be retrieved from computer-readable memory, which identifies remediation actions that can be executed for respective elements. Remediation actions can be automatically executed in accordance with the mitigation recommendation. For example, a remediation action can be executed to mitigate risk resulting from a respective element.

The disclosed techniques leverage the combination of an ontology encoding a set of rules to be used for representing the risk dependencies within a system composed of objects and processes and a method to calculate the propagation of risk within the represented system. Thus, a process-aware risk-propagation approach is used to facilitate the assessment of risk propagation between processes and objects with different levels of abstraction.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products, i.e., one or more modules of computer program instructions encoded on a computer readable medium for execution by, or to control the operation of, data processing apparatus. The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code) that constitutes processor firmware, a protocol stack, a database management system, an operating system, or a combination of one or more of them. A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a standalone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random access memory or both. Elements of a computer can include a processor for performing instructions and one or more memory devices for storing instructions and data. Generally, a computer will also include, or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display), LED (light-emitting diode) monitor, for displaying information to the user and a keyboard and a pointing device (e.g., a mouse or a trackball), by which the user may provide input to the computer. Other kinds of devices may be used to provide for interaction with a user as well; for example, feedback provided to the user may be any appropriate form of sensory feedback (e.g., visual feedback, auditory feedback, or tactile feedback); and input from the user may be received in any appropriate form, including acoustic, speech, or tactile input.

Implementations may be realized in a computing system that includes a back end component (e.g., as a data server), or that includes a middleware component (e.g., an application server), or that includes a front end component (e.g., a client computer having a graphical user interface or a Web browser through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN") (e.g., the Internet).

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the scope of the following claims.

**Claims**

1. A computer-implemented method for mitigating cyber security risk of an enterprise network (120), the computer-implemented method being executed by one or more processors and comprising:

   obtaining generic ontology data (M2) representing classes, properties, and relations for multiple use cases;
   generating, from the generic ontology data, domain-specific ontology data (M1) representing classes, properties, and relations for a particular use case; and

   **characterised in that** it comprises:

   generating a knowledge graph (219; 225; 550; 600) by mapping the generic ontology data to the domain-specific ontology data, the knowledge graph including nodes (602; 604; 610; 620) and edges between the nodes, the nodes including asset nodes representing assets and process nodes representing processes; each edge representing a relation between nodes;
   determining, from the knowledge graph, an aggregated risk for a first process represented by a first process node, including:

   identifying, for the first process node, a set of incoming nodes, each incoming node comprising an asset node or a process node and being connected to the first process node by a respective edge;
   determining a direct risk for the first process based on relations between the first process node and asset nodes of the set of incoming nodes; and
   determining an indirect risk for the first process based on relations between the first process node and process nodes of the set of incoming nodes; and

   generating, based on the aggregated risk for the first process node, a mitigation recommendation (720) including one or more actions for reducing the aggregated risk for the first process node.

2. The method of claim 1, wherein determining the direct risk for the first process node based on relations between the first process node and asset nodes of the set of incoming nodes comprises:

   identifying an edge representing a relation between the first process node and a first asset node, the edge being associated with an importance value representing an amount of risk propagated from the first asset node to the first process node; and
   determining the direct risk for the first process node by multiplying the importance value by a risk associated with the first asset node.

3. The method of claim 1 or 2, wherein determining the indirect risk for the first process based on relations between the first process node and process nodes of the set of incoming nodes comprises:

   identifying an edge representing a relation between the first process node and a second process node, the edge being associated with an importance value representing an amount of risk propagated from the second process node to the first process node; and
   determining the indirect risk for the first process node by multiplying the importance value by a risk associated with the second process node.

4. The method of claim 1, 2 or 3, wherein the direct risk for the first process is represented by a direct risk vector including multiple risk values each risk value being associated with a different aspect of risk.

5. The method of claim 4, wherein aspects of risk include availability risk, confidentiality risk, integrity risk, and safety risk.

6. The method of claim 4 or 5, wherein the indirect risk for the first process is represented by an indirect risk vector including multiple risk values, each risk value being associated with the different aspect of risk.

7. The method of claim 6, wherein the aggregated risk for the first process is represented by an aggregated risk vector including multiple risk values, each risk value being associated with the different aspect of risk.

8. The method of claim 7, wherein determining the aggregated risk for the first process comprises generating the aggregated risk vector, including selecting, for each of the different aspects of risk, the maximum risk value between the direct risk vector and indirect risk vector.

9. The method of any of the preceding claims, wherein each edge is associated with an importance vector representing an amount of risk propagated between nodes connected by the edge.

10. The method of any of the preceding claims, wherein each edge represents a hierarchy relation, an abstraction relation, or a process dependency relation,

   wherein, optionally, a process dependency relation represents risk propagation through a workflow including multiple processes, and/or
   wherein, optionally, a hierarchy relation represents risk propagation from an asset to a process that is correlated with the asset.

11. The method of any of the preceding claims, comprising:
   automatically executing at least one of the one or more actions included in the mitigation recommendation.

12. The method of any of the preceding claims, comprising presenting, through a user interface (700), a graphical representation of the knowledge graph and an indication of the mitigation recommendation.

13. One or more non-transitory computer-readable storage media coupled to one or more processors and having instructions stored thereon which, when executed by the one or more processors, cause the one or more processors to perform the operations defined in any of claims 1-12.

14. A system (108), comprising:

   one or more processors; and
   a computer-readable storage device coupled to the one or more processors and having instructions stored thereon which, when executed by the one or more processors, cause the one or more processors to perform the operations according to any of claims 1 to 12.

**Patentansprüche**

1. Computer-implementiertes Verfahren zum Abschwächen eines Cybersicherheitsrisikos eines Unternehmensnetzwerks (120), wobei das computer-implementierte Verfahren von einem oder mehreren Prozessoren ausgeführt wird und umfassend:

   Erhalten von generischen Ontologiedaten (M2), die Klassen, Eigenschaften und Beziehungen für mehrere Anwendungsfälle darstellen;
   Erzeugen von domänenspezifischen Ontologiedaten (M1), die Klassen, Eigenschaften und Beziehungen für einen bestimmten Anwendungsfall darstellen, aus den generischen Ontologiedaten; und **dadurch gekennzeichnet, dass** es umfasst:

      Erzeugen eines Wissensgraphen (219; 225; 550; 600) durch Abbilden der generischen Ontologiedaten auf die domänenspezifischen Ontologiedaten, wobei der Wissensgraph Knoten (602; 604; 610; 620) und Kanten zwischen den Knoten einschließt, wobei die Knoten Asset-Knoten einschließen, die Assets darstellen, und Prozess-Knoten, die Prozesse darstellen; wobei jede Kante eine Beziehung zwischen Knoten darstellt;
      Bestimmen, aus dem Wissensgraphen, eines aggregierten Risikos für einen ersten Prozess, der durch einen ersten Prozessknoten dargestellt wird, einschließlich:

         Identifizieren eines Satzes von ankommenden Knoten für den ersten Prozessknoten, wobei jeder ankommende Knoten einen Asset-Knoten oder einen Prozessknoten umfasst und mit dem ersten Prozessknoten durch eine entsprechende Kante verbunden ist;

Bestimmen eines direkten Risikos für den ersten Prozess auf der Grundlage von Beziehungen zwischen dem ersten Prozessknoten und Asset-Knoten des Satzes von ankommenden Knoten; und

Bestimmen eines indirekten Risikos für den ersten Prozess auf der Grundlage von Beziehungen zwischen dem ersten Prozessknoten und Prozessknoten des Satzes von ankommenden Knoten; und

Erzeugen, auf der Grundlage von dem aggregierten Risiko für den ersten Prozessknoten, einer Abschwächungsempfehlung (720), die eine oder mehrere Aktionen zur Reduzierung des aggregierten Risikos für den ersten Prozessknoten einschließt.

2. Verfahren nach Anspruch 1, wobei das Bestimmen des direkten Risikos für den ersten Prozessknoten auf der Grundlage von Beziehungen zwischen dem ersten Prozessknoten und Asset-Knoten des Satzes von ankommenden Knoten umfasst:

Identifizieren einer Kante, die eine Beziehung zwischen dem ersten Prozessknoten und einem ersten Asset-Knoten darstellt, wobei die Kante mit einem Wichtigkeitswert verbunden ist, der einen Risikobetrag darstellt, der sich von dem ersten Asset-Knoten zu dem ersten Prozessknoten ausbreitet; und

Bestimmen des direkten Risikos für den ersten Prozessknoten durch Multiplizieren des Wichtigkeitswerts mit einem Risiko, das mit dem ersten Asset-Knoten verbunden ist.

3. Verfahren nach Anspruch 1 oder 2, wobei das Bestimmen des indirekten Risikos für den ersten Prozess auf der Grundlage von Beziehungen zwischen dem ersten Prozessknoten und Prozessknoten des Satzes von ankommenden Knoten umfasst:

Identifizieren einer Kante, die eine Beziehung zwischen dem ersten Prozessknoten und einem zweiten Prozessknoten darstellt, wobei die Kante mit einem Wichtigkeitswert verbunden ist, der einen Risikobetrag darstellt, der sich von dem zweiten Prozessknoten zu dem ersten Prozessknoten ausbreitet; und

Bestimmen des indirekten Risikos für den ersten Prozessknoten durch Multiplizieren des Wichtigkeitswerts mit einem mit dem zweiten Prozessknoten verbundenen Risiko.

4. Verfahren nach Anspruch 1, 2 oder 3, wobei das direkte Risiko für den ersten Prozess durch einen direkten Risikovektor dargestellt wird der mehrere Risikowerte einschließt wobei jeder Risikowert mit einem anderen Aspekt des Risikos verbunden ist.

5. Verfahren nach Anspruch 4, wobei die Risikoaspekte ein Verfügbarkeitsrisiko, ein Vertraulichkeitsrisiko, ein Integritätsrisiko und ein Sicherheitsrisiko einschließen.

6. Verfahren nach Anspruch 4 oder 5, wobei das indirekte Risiko für den ersten Prozess durch einen indirekten Risikovektor dargestellt wird der mehrere Risikowerte einschließt, wobei jeder Risikowert mit einem anderen Aspekt des Risikos verbunden ist.

7. Verfahren nach Anspruch 6, wobei das aggregierte Risiko für den ersten Prozess durch einen aggregierten Risikovektor dargestellt wird, der mehrere Risikowerte einschließt, wobei jeder Risikowert mit einem anderen Aspekt des Risikos verbunden ist.

8. Verfahren nach Anspruch 7, wobei das Bestimmen des aggregierten Risikos für den ersten Prozess das Erzeugen des aggregierten Risikovektors umfasst, einschließlich des Auswählens des maximalen Risikowerts zwischen dem direkten Risikovektor und dem indirekten Risikovektor für jeden der verschiedenen Aspekte des Risikos.

9. Verfahren nach einem der vorstehenden Ansprüche, wobei jede Kante mit einem Wichtigkeitsvektor verbunden ist, der einen Risikobetrag darstellt, der sich zwischen den durch die Kante verbundenen Knoten ausbreitet.

10. Verfahren nach einem der vorstehenden Ansprüche, wobei jede Kante eine Hierarchiebeziehung, eine Abstraktionsbeziehung oder eine Prozessabhängigkeitsbeziehung darstellt,

wobei optional eine Prozessabhängigkeitsbeziehung eine Risikoausbreitung durch einen Arbeitsablauf mit mehreren Prozessen darstellt, und/oder

wobei, optional, eine Hierarchiebeziehung die Risikoausbreitung von einem Asset zu einem Prozess darstellt, der mit dem Asset korreliert ist.

**11.** Verfahren nach einem der vorstehenden Ansprüche, umfassend:
automatisches Ausführen von mindestens einer der einen oder mehreren Aktionen, die in der Abschwächungsempfehlung eingeschlossen sind.

**12.** Verfahren nach einem der vorstehenden Ansprüche, umfassend das Darstellen einer grafischen Darstellung des Wissensgraphen und eines Hinweises auf die Abschwächungsempfehlung über eine Benutzeroberfläche (700).

**13.** Ein oder mehrere nicht flüchtige, computerlesbare Speichermedien, die mit einem oder mehreren Prozessoren gekoppelt sind und auf denen Anweisungen gespeichert sind, die, wenn sie von dem einen oder den mehreren Prozessoren ausgeführt werden, den einen oder die mehreren Prozessoren veranlassen, die in einem der Ansprüche 1-12 definierten Operationen durchzuführen.

**14.** System (108), umfassend:

einen oder mehrere Prozessoren; und
eine computerlesbare Speichervorrichtung, die mit dem einen oder den mehreren Prozessoren gekoppelt ist und auf der Anweisungen gespeichert sind, die, wenn sie von dem einen oder den mehreren Prozessoren ausgeführt werden, den einen oder die mehreren Prozessoren veranlassen, die Operationen nach einem $_{de}$r Ansprüche 1 bis 12 durchzuführen.


**Revendications**

**1.** Procédé mis en œuvre par ordinateur pour atténuer un risque de cybersécurité d'un réseau (120) d'entreprise, le procédé mis en œuvre par ordinateur étant exécuté par un ou plusieurs processeurs et comprenant :

l'obtention de données (M2) d'ontologie génériques représentant des classes, des propriétés et des relations pour plusieurs cas d'utilisation ;
la génération, à partir des données d'ontologie génériques, de données (M1) d'ontologie spécifiques à un domaine représentant des classes, des propriétés et des relations pour un cas d'utilisation particulier ; et **caractérisé en ce qu'**il comprend :

la génération d'un graphe (219 ; 225 ; 550 ; 600) de connaissances en mappant les données d'ontologie génériques aux données d'ontologie spécifiques à un domaine, le graphe de connaissances incluant des nœuds (602 ; 604 ; 610 ; 620) et des arêtes entre les nœuds, les nœuds incluant des nœuds d'actifs représentant des actifs et des nœuds de processus représentant des processus ; chaque arête représentant une relation entre des nœuds ;
la détermination, à partir du graphe de connaissances, d'un risque agrégé pour un premier processus représenté par un premier nœud de processus, incluant :

l'identification, pour le premier nœud de processus, d'un ensemble de nœuds entrants, chaque nœud entrant comprenant un nœud d'actif ou un nœud de processus et étant connecté au premier nœud de processus par une arête respective ;
la détermination d'un risque direct pour le premier processus sur la base de relations entre le premier nœud de processus et des nœuds d'actifs de l'ensemble de nœuds entrants ; et
la détermination d'un risque indirect pour le premier processus sur la base de relations entre le premier nœud de processus et des nœuds de processus de l'ensemble de nœuds entrants ; et

la génération, sur la base du risque agrégé pour le premier nœud de processus, d'une recommandation (720) d'atténuation incluant une ou plusieurs actions de réduction du risque agrégé pour le premier nœud de processus.

**2.** Procédé selon la revendication 1, dans lequel la détermination du risque direct pour le premier nœud de processus sur la base de relations entre le premier nœud de processus et des nœuds d'actifs de l'ensemble de nœuds entrants comprend :

l'identification d'une arête représentant une relation entre le premier nœud de processus et un premier nœud d'actif, l'arête étant associée à une valeur d'importance représentant une quantité de risque propagé depuis le premier nœud d'actif au premier nœud de processus ; et

la détermination du risque direct pour le premier nœud de processus en multipliant la valeur d'importance par un risque associé au premier nœud d'actif.

3. Procédé selon la revendication 1 ou la revendication 2, dans lequel la détermination du risque indirect pour le premier processus sur la base de relations entre le premier nœud de processus et des nœuds de processus de l'ensemble de nœuds entrants comprend :

l'identification d'une arête représentant une relation entre le premier nœud de processus et un second nœud de processus, l'arête étant associée à une valeur d'importance représentant une quantité de risque propagé depuis le second nœud de processus au premier nœud de processus ; et

la détermination du risque indirect pour le premier nœud de processus en multipliant la valeur d'importance par un risque associé au second nœud de processus.

4. Procédé selon la revendication 1, la revendication 2 ou la revendication 3, dans lequel le risque direct pour le premier processus est représenté par un vecteur de risque direct incluant plusieurs valeurs de risque, chaque valeur de risque étant associée à un aspect de risque différent.

5. Procédé selon la revendication 4, dans lequel les aspects de risque incluent le risque de disponibilité, le risque de confidentialité, le risque d'intégrité et le risque de sécurité.

6. Procédé selon la revendication 4 ou la revendication 5, dans lequel le risque indirect pour le premier processus est représenté par un vecteur de risque indirect incluant plusieurs valeurs de risque, chaque valeur de risque étant associée à l'aspect de risque différent.

7. Procédé selon la revendication 6, dans lequel le risque agrégé pour le premier processus est représenté par un vecteur de risque agrégé incluant plusieurs valeurs de risque, chaque valeur de risque étant associée à l'aspect de risque différent.

8. Procédé selon la revendication 7, dans lequel la détermination du risque agrégé pour le premier processus comprend la génération du vecteur de risque agrégé, incluant la sélection, pour chacun des aspects de risque différents, de la valeur de risque maximale entre le vecteur de risque direct et le vecteur de risque indirect.

9. Procédé selon l'une quelconque des revendications précédentes, dans lequel chaque arête est associée à un vecteur d'importance représentant une quantité de risque propagé entre des nœuds connectés par l'arête.

10. Procédé selon l'une quelconque des revendications précédentes, dans lequel chaque arête représente une relation de hiérarchie, une relation d'abstraction, ou une relation de dépendance de processus,

dans lequel, facultativement, une relation de dépendance de processus représente une propagation de risque à travers un flux de travail incluant plusieurs processus, et/ou

dans lequel, facultativement, une relation de hiérarchie représente une propagation de risque d'un actif à un processus qui est corrélé à l'actif.

11. Procédé selon l'une quelconque des revendications précédentes, comprenant :
l'exécution automatique d'au moins une des une ou plusieurs actions incluses dans la recommandation d'atténuation.

12. Procédé selon l'une quelconque des revendications précédentes, comprenant la présentation, au travers d'une interface (700) utilisateur, d'une représentation graphique du graphe de connaissances et d'une indication de la recommandation d'atténuation.

13. Support(s) de stockage non transitoire(s) lisible(s) par ordinateur couplé(s) à un ou plusieurs processeurs et sur le(s) quel(s) sont stockées des instructions qui, lorsqu'elles sont exécutées par les un ou plusieurs processeurs, amènent les un ou plusieurs processeurs à réaliser des opérations définies dans une ou plusieurs des revendications 1 à 12.

14. Système (108), comprenant :

un ou plusieurs processeurs ; et
un dispositif de stockage lisible par ordinateur couplé aux un ou plusieurs processeurs et sur lequel sont stockées des instructions qui, lorsqu'elles sont exécutées par les un ou plusieurs processeurs, amènent les un ou plusieurs processeurs à réaliser des opérations selon l'une quelconque des revendications 1 à 12.

EP 4 258 601 B1

**FIG. 1**

**FIG. 2A**

Knowledge component 202

Risk-Process Ontology

Generic Risk Scope (M2) · Domain Specific Risk Scope (M1) · Case Scope (M0)

Ontology creation 206

Analytics component 204

Data extraction 208 → Extracted instances

Risk assessment 235

Risk propagation 232

Ontology update 234

EP 4 258 601 B1

**FIG. 2B**

300

302 — Risk propagation ontology & KG instance

304 — KG instance extraction using M2 constructs

306 — Run risk propagation analysis

$M_2$ Phenomenon

$M_1$ Domain specific concepts

$M_0$ KG instance individuals

$M_2$ level query

Extract relevant individuals

| source | destination | source risks | importance vector |
|---|---|---|---|
| 640 | 673 | ("Quantity":0.3, "Availability": 0.7, "Quality":0. 6) | ("Quantity":0. 8, "Availability": 1.0, "Quality": 1.0) |
| 64 6 | 640 | ("Quantity":0. 2, "Availability": 0.6, "Quality":0.5) | ("Quantity":0. 8, "Availability": 1.0, "Quality": 1.0) |
| 64 6 | 682 | ("Quantity":0. 2, "Availability": 0.6, "Quality":0.5) | ("Quantity":0. 8, "Availability": 1.0, "Quality": 1.0) |
| 654 | 690 | ("Quantity":0. 4, "Availability": 0.5, "Quality":0. 1) | ("Quantity":0. 8, "Availability": 1.0, "Quality": 1.0) |

Direct_risk=[0.2,0.5]

A

<Component of>                <Component of>

Importance=[1,1]

$A_1$                $A_2$

Direct_risk=[0. 1,0.5]     C     Direct_risk=[0. 2,0.4]

<Component of>                <Component of>

Importance=[1,1]

$C_1$                $C_2$

Direct_risk=[0. 3,0.6]                Direct_risk=[0. 2,0.5]

**FIG. 3**

FIG. 4A

EP 4 258 601 B1

FIG. 4B

450

420

M₂
Process/ hierarchy
risk propagation

410

M₁
Cyber-
security/
Production

Data properties

gen_domainSpecificMeasures
dom_cyberMeasure
dom_cyberAvailability
dom_cyberConfidentiality
dom_cyberIntegrity
dom_cyberSafety
dom_energyMeasure
dom_energyAvailability
dom_energyConsumption
dom_productionMeasure
dom_productionAvailability
dom_productionQuality
dom_productionQuantity

FIG. 5A

FIG. 5B

EP 4 258 601 B1

FIG. 6A

| Source ElementAtRisk | Destination ElementAtRisk | Relation | Source risk vector | Importance vector |
|---|---|---|---|---|
| LeakProjectFile (CyberImpact) | 192.168.250.210 (CyberAsset) | CorrelatedTo (Abstraction) | {"Confidentiality":0.53, "Integrity":0, "Availablity":0, "Safety":0} | {"Confidentiality":1, "Integrity":1, "Availablity":1, "Safety":1} |
| 192.168.250.210 (CyberAsset) | Door Disassembly (ProcessElement) | CorrelatedTo (Abstraction) | NA | {"Confidentiality":1, "Integrity":1, "Availablity":1, "Safety":1} |
| Door Disassembly (ProcessElement) | Dashboard Installation (ProcessElement) | FollowedBy (Dependency) | NA | {"Confidentiality":1, "Integrity":1, "Availablity":1, "Safety":1} |
| Door Disassembly (ProcessElement) | Vehicle Assembly (ProcessElement) | ComponentOf (Abstraction) | NA | {"Confidentiality":1, "Integrity":1, "Availablity":1, "Safety":1} |
| Dashboard Installation (ProcessElement) | Vehicle Assembly (ProcessElement) | ComponentOf (Abstraction) | NA | {"Confidentiality":1, "Integrity":1, "Availablity":1, "Safety":1} |

*FIG. 6B*

| Process Element | Process Level Risk | Cyber Asset | Cyber Asset Level Risk | Cyber Impact* Level Risk |
|---|---|---|---|---|
| Door Disassembly | $\overrightarrow{DR} = [0.53, 0.83, 0.33, 0.84]$<br>$\overrightarrow{IDR} = [0.00, 0.00, 0.00, 0.00]$<br>$\overrightarrow{TR} = [0.53, 0.83, 0.33, 0.84]$ | 192.168.250.210 | $\overrightarrow{DR} = [0.53, 0.83, 0.33, 0.84]$ | $\overrightarrow{DR_A} = [0.16, 0.58, \mathbf{0.33}, \mathbf{0.84}]$<br>$\overrightarrow{DR_B} = [0.00, 0.18, 0.00, 0.09]$<br>$\overrightarrow{DR_C} = [0.00, \mathbf{0.83}, 0.00, 0.00]$<br>$\overrightarrow{DR_D} = [\mathbf{0.53}, 0.00, 0.00, 0.00]$<br>$\overrightarrow{DR_E} = [0.00, 0.27, 0.09, 0.27]$<br>$\overrightarrow{DR_F} = [0.00, 0.26, 0.17, 0.17]$<br>$\overrightarrow{DR_G} = [0.00, 0.53, 0.00, 0.08]$<br>$\overrightarrow{DR_H} = [0.00, 0.26, 0.08, 0.08]$<br>$\overrightarrow{DR_I} = [0.00, 0.26, 0.08, 0.52]$<br>$\overrightarrow{DR_J} = [0.00, 0.25, 0.17, 0.34]$ |
| | | 192.168.250.108 | $\overrightarrow{DR} = [0.00, 0.00, 0.00, 0.00]$ | N/A |
| Dashboard Installation | $\overrightarrow{DR} = [0.00, 0.00, 0.00, 0.00]$<br>$\overrightarrow{IDR} = [0.53, 0.83, 0.33, 0.84]$<br>$\overrightarrow{TR} = [0.53, 0.83, 0.33, 0.84]$ | 192.168.250.3 | $\overrightarrow{DR} = [0.00, 0.00, 0.00, 0.00]$ | N/A |

660

**FIG. 6C**

**FIG. 7**

800

802
Obtain generic ontology data

804
Obtain domain-specific
ontology data

806
Mapping the generic ontology data to the
domain-specific ontology data to generate
a knowledge graph

808
Determine aggregated risk across the
the knowledge graph

810
Generate a mitigation recommendation
based on the aggregated risk

**FIG. 8**

**EP 4 258 601 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIU et al.** *Modelling a large scale system for risk assessment*